## Europäisches Patentamt

## European Patent Office

## Office européen des brevets

(19)

(11) Publication number: **0 071 100**
**B1**

(12)

# EUROPEAN PATENT SPECIFICATION

(45) Date of publication of patent specification: **15.10.86**

(21) Application number: **82106348.4**

(22) Date of filing: **15.07.82**

(51) Int. Cl.⁴: **G 02 B 6/18,** F 21 S 5/00,
G 02 B 6/26

(54) **Apparatus for collecting sunlight.**

(30) Priority: **29.07.81 JP 118667/81**

(43) Date of publication of application:
**09.02.83 Bulletin 83/06**

(45) Publication of the grant of the patent:
**15.10.86 Bulletin 86/42**

(84) Designated Contracting States:
**CH DE FR GB IT LI SE**

(56) References cited:
**DE-A-2 617 431**
**FR-A-2 434 996**

**PATENTS ABSTRACTS OF JAPAN, vol. 5, no.
77, (P-62)749r, 21st May 1981**

(73) Proprietor: **Mori, Kei**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Hoeger, Stellrecht & Partner**
**Uhlandstrasse 14c**
**D-7000 Stuttgart 1 (DE)**

Courier Press, Leamington Spa, England.

## Description

This invention relates to a solar energy collector, more particularly to an apparatus for collecting sunlight for concentration and introduction into an optical conductor for transmission therealong.

Hitherto, various attempts have been made to utilize the solar energy reaching the earth's surface. Most of the prior art systems involve the transformation of the captured solar energy into electric or thermal energy. There have been very few that directly utilize the light of solar radiation as a source of optical energy. For lighting applications, however, the direct use of solar energy in the form of light is preferable as there is no transformation loss. Sunlight can be directly used by collecting it on the earth's surface where the sunlight arrives, concentrating the sunlight into a bundle of dense light by means of a convergent lens system, introducing it into an optical conductor or optical fiber cable for transmission therealong, then allowing it to issue out of the exit of the optical conductor or optical fiber cable to illuminate the region where illumination is desired.

The problem with such sunlight collectors is that it is difficult to substantially collimate the collected and concentrated sunlight. The reason why it is necessary to substantially collimate the light is that the sunlight introduced into the optical fiber cable propagates therealong by repeated reflection on the boundary surface between the core and the cladding. The light that impinges on the boundary surface at an angle of incidence larger than the critical angle of incidence is not reflected back to the core, but is transmitted toward the cladding to leak out of the cable. Accordingly, it is essential for a sunlight collector that the outgoing light be substantially collimated. This is particularly true in the case where a tubular light guide with or without inner mirror surface is employed as a light conductor.

FR—A—2 434 996 discloses an apparatus according to the preamble of claim 1 employing a normal fiber bundle, one end of which is arranged at the focus of the convergent system.

It is an object of the present invention to provide an apparatus for collecting sunlight which is capable of more effectively collimating the collected and concentrated light.

Another object of the present invention is to provide an apparatus for collecting sunlight which is simple in construction and is easy to manufacture.

This is accomplished by a device as characterized in claim 1.

With this arrangement, the sunlight collected and condensed by the convergent lens system is substantially collimated so that it is introduced without loss into an optical fiber cable or light guide. This enables the use of an optical fiber cable having a smaller numerical aperture.

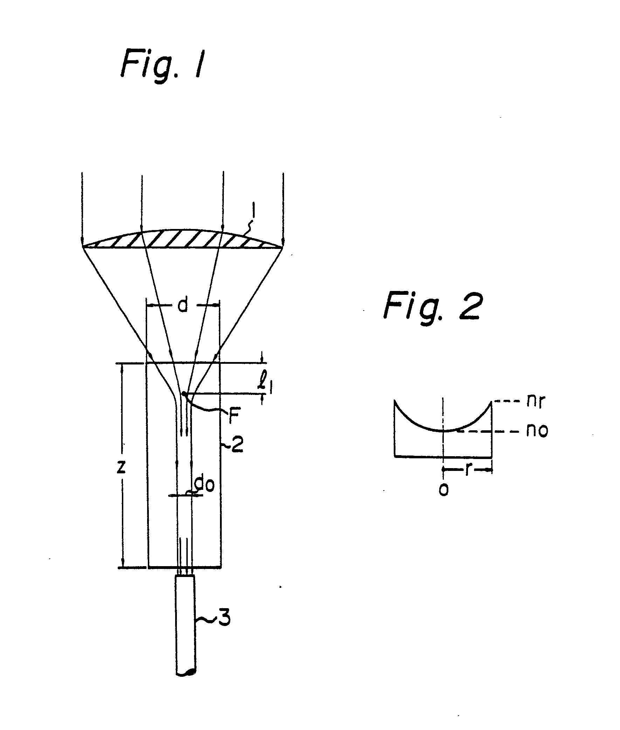

Figure 1 is a cross-sectional view of the apparatus according to the invention; and Fig. 2 is a graph showing the distribution of the refractive index of the light collimating rod of the apparatus of Fig. 1.

Referring to Fig. 1, there is shown an embodiment of the apparatus according to the invention. The apparatus includes convergent lens 1 and light-collimating rod 2 mounted on a suitable frame (not shown), in alignment with one another. Optical fiber cable 3 is positioned at the opposite side of convergent lens 1 in such a manner that the inlet thereof is located adjacent to and in alignment with light collimating rod 2.

The light collimating rod 2 has a gradient refractive index which increases from the central axis toward the periphery along a parabolic curve, as shown in Fig. 2. Such light collimating rods with parabolic gradients of refractive index may be prepared by the two-step copolymerization of diethylene glycol bis (allyl carbonate) with phenyl methacrylate or vinyl benzoate (see Appl. Phys. Lett., 23, 247 (1973); and, Appl. Opt., June 1, 1981, article by Y. Ohtsuka et al.

As illustrated in Fig. 1, the relative position of light collimating rod 2 and convergent lens 1 is such that focus F of the lens is located within light-collimating rod 2.

In use, sunlight passed through convergent lens 1 is converged toward focus F. On entering the light collimating rod 2, the convergent light undergoes refraction to become a pencil of collimated light which transmits the optical fiber cable 3 along the central axis of light collimating rod 2, as shown by the arrows.

The light collimating rod and optical fiber cable may be selected according to the following information: Assuming the diameter of light collimating rod 2 to be $d$ mm, the diameter of the bundle of parallel light rays to be $d_o$, the length of light collimating rod 2 to be $z$ mm, the refractive index at the central portion of light collimating rod 2 to be $n_o$, and the refractive-index distribution constant to be $b$, the refractive index $n_r$ of light collimating rod 2 at the peripheral portion distant by $r$ from the central axis is determined by the following equation:

$$n_r = n_o(1 + \tfrac{1}{2}b\, r^2) \tag{1}$$

Assuming $b = 0.003$, $d = 10.2$ mm, and $n_o = 1.5$:

$$n_{(r=5.1)} = 1.5(1 + \tfrac{1}{2} \times 0.003 \times 5.1^2) = 1.559 \tag{2}$$

This means that the refractive index at the peripheral portion of the light collimating rod is 1.559. Further, assuming the distance between focus F and the inlet surface of the rod to be $l_1$, the reduction ratio $\gamma(d_o/d)$ may be expressed as follows:

$$\gamma = n_o\sqrt{b} \times l_1 \sin h\ (\sqrt{b} \times z) + \cos h\ (\sqrt{b} \times z) \tag{3}$$

2

Actual use of a light collimating rod having refractive indices of $n_o$=1.5 and $n_r$=1.559, a diameter $d$ of 10.2 mm, and a length $z$ of 29.7 mm showed it was possible to obtain a pencil of parallel light having a diameter $d_o$ of 1.734 mm. Accordingly, by substituting the value 0.17 for the reduction ratio $\gamma(d_o/d)$ in equation (3):

$$0.17 = 1.5\sqrt{0.003} \times l_1 \ \sin \ h \ (\sqrt{0.003} \times 29.7) + \cos \ h \ (\sqrt{0.003} \times 29.7) \qquad (4)$$

To find the value of $l_1$ from equation (4), $l_1$ is −8.658. That the resultant value is negative is due to the fact that the distance $l_1$ was measured in the direction of the path of the light. Thus, the actual position of the image is 8.658 mm from the inlet surface of the light collimating rod. Accordingly, if optical fiber cable 3 having a diameter equal to or slightly greater than $d_o$ mm is connected to the exit of light defocusing rod 2, it is possible to effectively introduce light rays into optical fiber cable 3.

## Claims

1. An apparatus for collecting sunlight, comprising a convergent lens system (1) for receiving and concentrating sunlight arriving thereon, and a light conducting means (2, 3) aligned with said convergent lens system (1) for receiving concentrated sunlight from said convergent lens system (1) for transmission there along, characterized in that said light conducting means (2, 3) comprises a light collimating rod (2) having a gradient refractive index which increases from the central axis toward the periphery thereof, that said convergent lens system (1) is arranged with respect to said light collimating rod (2) such that the focus (F) thereof is located within said light collimating rod (2) and that said light collimating rod is aligned with said convergent lens system (1).

2. The apparatus as claimed in claim 1, wherein a light conductor cable (3) is connected to the outlet side of said light collimating rod (2).

## Patentansprüche

1. Gerät zum Sammeln von Sonnenlicht, umfassend: ein bündelndes Linsensystem (1) zum Empfangen und Konzentrieren des darauf fallenden Sonnenlichts und eine Lichtleiteranordnung (2, 3), welche bezüglich dieses bündelnden Linsensystems (1) fluchtend ausgerichtet ist, um das konzentrierte Sonnenlicht von dem bündelnden Lichtsystem (1) längs derselben (der Lichtleiteranordnung) zu übertragen, dadurch gekennzeichnet, daß die Lichtleiteranordnung einen Licht-Kollimationsstab (2) umfasst, welcher einen Gradienten des Brechungsindex besitzt, der von der Mittelachse in Richtung auf die Peripherie desselben zunimmt, daß das bündelnde Linsensystem (1) bezüglich dieses Licht-Kollimationsstabes (2) derart angeordnet ist, daß sein Brennpunkt (F) innerhalb dieses Licht-Kollimationsstabes (2) liegt, und daß dieser Licht-Kollimationsstab bezüglich des bündelnden Linsensystems (1) fluchtend ausgerichtet ist.

2. Gerät wie es in Anspruch 1 beansprucht ist, bei dem mit der Auslaßseite des Licht-Kollimationsstabes (2) ein Lichtleiterkabel (3) verbunden ist.

## Revendications

1. Dispositif pour collecter la lumière solaire, comprenant un système de lentilles convergentes (1) destiné à recevoir et à concentrer la lumière solaire incidente et des moyens de conduction de la lumière (2, 3) alignés sur ledit système de lentilles convergentes (1) pour recevoir la lumière solaire concentrée provenant dudit système, de lentilles convergentes (1) pour qu'elle soit transmise le long de ces moyens, caractérisé en ce que lesdits moyens de conduction de la lumière (2, 3) comprennent une canne (2) de collimation de la lumière possédant un indice de réfraction progressif qui croît de l'axe central vers sa périphérie,

en ce que ledit système de lentilles convergentes (1) est disposé par rapport à ladite canne (2) de collimation de la lumière de telle manière que son foyer (F) soit situé à l'intérieur de ladite canne (2) de collimation de la lumière, et

en ce que ladite canne de collimation de la lumière est alignée sur ledit système de lentilles convergentes.

2. Dispositif selon la revendication 1, dans lequel un câble conducteur de lumière (3) est raccordé au côté de sortie de ladite canne (2) de collimation de la lumière.

# Fig. 1

# Fig. 2